# EUROPEAN PATENT SPECIFICATION

(11) **EP 2 122 081 B1**
(45) Date of publication and mention of the grant of the patent: **15.10.2014**
(21) Application number: 08701816.4
(22) Date of filing: 16.01.2008
(51) Int. Cl.: E04B 5/02, E04C 2/26, E04C 2/34

(54) **Method of manufacturing improved flooring panels**
Verfahren zur Herstellung von verbesserten Bodenpaneelen
Procédé de fabrication de panneaux de parquet améliorés

(30) Priority: 18.01.2007 GB 0700990
(43) Date of publication of application: 25.11.2009
(73) Proprietor: Intelligent Engineering (Bahamas) Limited, Nassau (BS)
(72) Inventor: KENNEDY, Stephen, John, Ottawa, Ontario K1Y 0N2 (CA); TURNER, Guy, Lockley, Gerrards Cross SL9 7QN (GB)
(74) Representative: Leeming, John Gerard
(86) International application number: PCT/GB2008/000138
(87) International publication number: WO 2008/087402

(56) References cited:
- EP-A- 0 074 732
- DE-A1- 2 340 054
- DE-U1- 8 607 213
- US-A- 3 823 525
- US-A- 4 593 449
- US-A- 5 635 306
- US-A- 5 791 118
- US-A1- 2004 055 248

## Description

The present invention relates to methods of manufacturing structural sandwich plate members, e.g. flooring panels, particularly for buildings.

Many modem buildings are constructed with a framework of steel or reinforced concrete columns supporting horizontal beams at the level of each floor. Floor panels are then placed on or made composite with the beams to form each floor. The floor panels may be of the order of 10m by 2.5m so that four panels fill a square 10m by 10m bay in the frame and are connected to each other or the beams at their edges and ends. Conventionally such floor panels have been made of reinforced or prestressed concrete, though proposals to use pultruded fibre-reinforced composites have also been made. Floors may also be cast in place with concrete or made of composite construction such as a preformed metal deck with a concrete finishing slab. Concrete floor panels of this type are heavy, increasing the load that must be bourne by the framework, and up to 30cm thick, reducing the number of floors, and hence usable area, that can be achieved in a given height of building.

Structural sandwich plate members are described in US 5,778,813 and US 6,050,208 and comprise outer metal, e.g. steel, plates bonded together with an intermediate elastomer core, e.g. of unfoamed polyurethane. These sandwich plate systems may be used in many forms of construction to replace stiffened steel plates, formed steel plates, reinforced concrete or composite steel-concrete structures and greatly simplify the resultant structures, improving strength and structural performance (e.g. stiffness, damping characteristics) while saving weight. Further developments of these structural sandwich plate members are described in WO 01/32414. As described therein, foam forms may be incorporated in the core layer to reduce weight and transverse metal shear plates may be added to improve stiffness.

According to the teachings of WO 01/32414, the foam forms can be either hollow or solid. Hollow forms generate a greater weight reduction and are therefore advantageous. The forms described in that document are not confined to being made of lightweight foam material and can also be make of other materials such as wood or steel boxes, plastic extruded shapes and hollow plastic spheres.

However, none of the presently known forms of structural sandwich plate are particularly well suited to form the floors of buildings.

DE 23 40 054 A discloses a table tennis table of which the table top is formed from aluminium boards separated by an expanded aluminium spacer layer. A sound absorbing layer may be provided between the top aluminium cover sheet and the corrugated aluminium spacer layer.

DE 86 07 213 U1 discloses a core board for pallets having aluminium sheet outer cover layers and intermediate layers of glass fibre and carbon fibre webs with foam filling.

It is an aim of the present invention to provide a structural sandwich plate member that is particularly well-suited to use in floors of buildings.

According to the present invention, there is provided a method of manufacture of a structural sandwich plate member as defined in the appended claims.

Because the outer core is bonded both to parts of the corrugated metal plate and to the outer metal plates, it provides a path for transferring forces, especially shear forces, between the outer metal plates. At the same time, a large proportion of the volume of the core can be made up of relatively lightweight (compared to the material of the outer core) filler material so that the overall weight of the plate member is greatly reduced.

The internal composite core of the present invention can provide enhanced shear resistance, to reduce deflection under load, enhanced vibrational performance (reduced accelerations), enhanced fire resistance, and/or additional acoustic damping.

The materials, dimensions and general properties of the outer plates of the structural sandwich plate member of the invention may be chosen as desired for the particular use to which the structural sandwich plate member is to be put and in general may be as described in US-5,778,813 and US-6,050,208. Steel or stainless steel is commonly used in thicknesses of 0.5 to 20mm and aluminium may be used where light weight is desirable. Similarly, the plastics or polymer core may be any suitable material, for example an elastomer such as polyurethane, as described in US-5,778,813 and US-6,050,208 and is preferably compact, i.e. not a foam. The core is preferably a thermosetting material rather than thermoplastic.

The present invention will be described below with reference to exemplary embodiments and the accompanying schematic drawings, in which:
Figure 1 is a cross-sectional view of a structural sandwich plate member according to an embodiment of the present invention;.
Figure 2 is a flow diagram of a method of manufacturing a floor panel according the invention;
Figure 3 is a partial cross-sectional view showing the connection of two structural sandwich plate members according to an embodiment of the present invention;
Figure 4 is a partial cross-sectional view showing the connection of a structural sandwich plate member according to an embodiment of the present invention to a beam;
Figure 5 is a plan view of a floor constructed from structural sandwich plate members according to an embodiment of the present invention; and
Figure 6 is a cross-sectional view showing another connection of two structural sandwich plate members according to an embodiment of the present invention.

In the various drawings, like parts are indicated by like reference numerals.

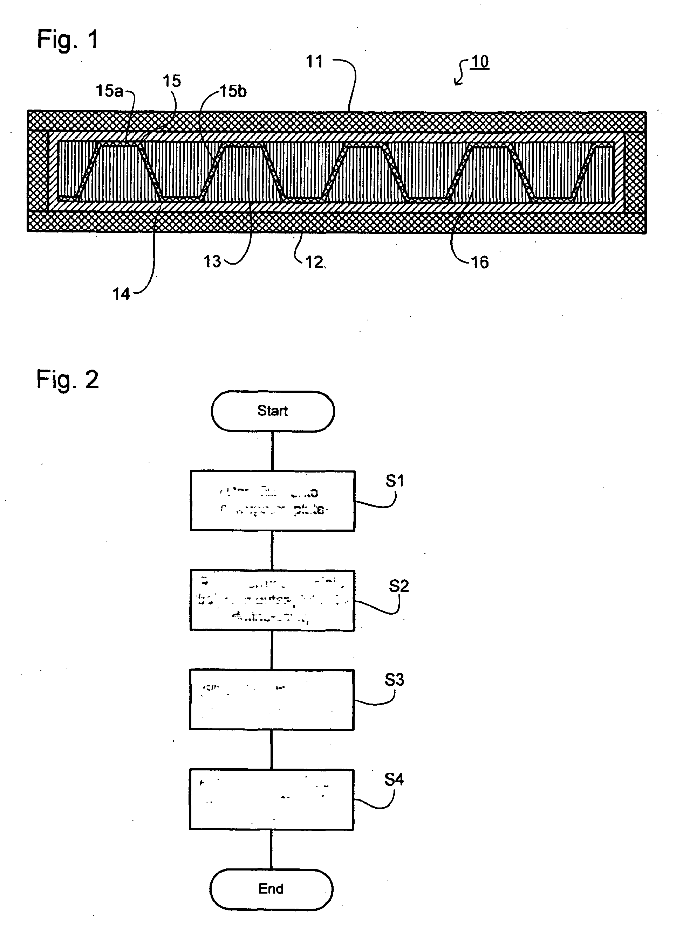

The structural sandwich plate member (or panel) 10 shown in Figure 1 comprises upper and lower outer plates (faceplates) 11, 12 which may be of steel or aluminium and have a thickness, for example, in the range of from 0.5 to 8mm, more preferably 1 to 5mm, most preferably 1 to 2.5mm. Edge plates, rolled structural shapes, extruded structural shapes, or perimeter bars are provided between the face plates 11, 12 around their outer peripheries to form a closed cavity. In the cavity between the face plates 11, 12 is a composite core 13. This core may have a thickness in the range of from 15 to 200mm; in many applications 25 to 100mm is suitable. The overall dimensions of the plate member in plan may be from 1 to 5m width by 5 to 15m length. A preferred size is 2.5m by 10m. Plate members may be made in standard sizes or tailor-made to specific shapes and/or dimensions.

The core 13 comprises an outer core layer 14 of plastics or polymer material (preferably a thermoset, compact elastomer such as polyurethane as discussed above) which is bonded to the face plates 11, 12 with sufficient strength and has sufficient mechanical properties to transfer shear forces expected in use. The bond strength between the outer core layer 14 and face plates 11, 12 should be greater than 3MPa, preferably 6MPa, and the modulus of elasticity of the core material should be greater than 200MPa, preferably greater than 250MPa. For low load applications, where the typical use and occupancy loads are of the order of 1.4kPa to 7.2kPa, the bond strength may be lower, *e.g.* approximately 1.0MPa, but sufficient to provide the required resistance, based on safety indices associated with construction for all anticipated loads, including use and occupancy loads, construction loads and wind, earthquake and temperature loads.

The inner part of the core 13 is a corrugated metal, e.g. steel, plate 15 with the corrugations at least partly filled by a foam or other lightweight filler material 16. Preferably the corrugations are substantially completely filled so that the inner core, comprising corrugated plate 15 and filler material 16, presents substantially flat outer surfaces. The corrugated plate may have embossments or openings to increase composite action with the foam or elastomer bonded to it. The filler material need not contribute significantly to the strength of the panel and hence many materials are suitable. It should be of lower density than the material of the outer core layer 14, preferably less than 50% of the density of the material of the outer core layer 14, more preferably less than 25% and most preferably less than 10%. Both open and closed cell foams may be used but if the panel is manufactured by injection (see below) closed cell foams may be preferred to limit ingress of the material of the outer core layer 13 and in such cases it is desirable that the filler material have sufficient strength to substantially maintain its shape during the casting process. A suitable filter material is polypropylene foam with a density of from 40 to 50 kg/m³. The filler material is preferably cast onto the corrugated steel plate. Also, preformed foam sections may be glued to the corrugated metal plate. The filler material preferably contains fire retardants so that it does not ignite under fire conditions mandated by relevant building codes. Other materials, such as a ceramic coating, may be inserted into the core or bonded to the corrugated metal plate to act as a thermal break, thereby increasing the fire resistance of the plate member.

The corrugated plate 15 and filler 16 are arranged so that on the major faces of the inner part of the core, parts 15a of the corrugated plate 15 are exposed and bonded to the outer core layer 14 with similar strength to the bond between the outer core and the faceplates. The total area of the exposed parts 15a of the corrugated plate 15 on each of the major faces is sufficient to transfer shear forces from either faceplate through the elastomer to the corrugated metal plate and to stabilise the faceplate to prevent local buckling. The total area is preferably in the range of from 10 to 45% of the total area of the face, more preferably in the range of from 20 to 40% and most preferably in the range of 25 to 35%. If the panel is elongate, corrugations of the corrugated plate preferably extend substantially parallel to the longest dimension of the panel, Figure 1 being a lateral cross-section of the panel. The exposed parts 15a are in that case elongate strips and may have a width in the plane parallel to the major faces of the panel in the range of from 50mm to 200mm.

The corrugated plate may have a thickness in the range of from 0.5mm to 5mm and may be perforated, especially in the webs 15b, to facilitate casting of the filler material onto the corrugated plate. Surface treatments, such as adhesives, roughening, cleaning or embossing, may be applied to the corrugated metal plate to enhance its bond to the outer core layer 13 and/or the filler material 16.

As shown, the outer core layer covers the major (top and bottom) faces of the inner core part 13 and also the side faces, but in some applications it may be not be necessary that the outer core layer is present on all sides of the inner core part.

By virtue of the core 13, the structural sandwich plate member has a strength and load bearing capacity of a stiffened steel plate having a substantially greater plate thickness and significant additional stiffening. The outer core layer 14 and corrugated plate 15 act to transfer shear forces between the outer metal plates 11, 12. The outer core layer, each side of the inner core, preferably has a thickness of 10mm or more and may have a thickness of between 10 and 25% of the total core thickness.

As a floor panel, the plate preferably presents a generally flat upper surface but the lower surface need not be flat and either or both surfaces may be provided with recesses, trenches, grooves or openings to accommodate utility conduits and outlets. Both vertical and horizontal passages may also be provided within the floor panel for utility conduits.

A preferred method of manufacturing floor panels according to the invention is shown in Figure 2. This is preferably performed off-site and involves:
casting the filler material 16 onto the corrugated plate 15, S1;
placing the outer metal layers 11, 12 and inner core 15, 16 in a mould, with spacers to define a cavity between each top plate and the inner core, S2;
injecting liquid plastics of polymer material into the cavity through an injection port, S3; and
causing or allowing the plastics of polymer material to cure to form the outer core layer 14, S4.

Edge plates, perimeter bars or rolled or extruded structural shapes 22 may be provided around the edges of the panel. A single continuous cavity may be formed extending around the inner core 15, 16 and extending across both major faces of it. Alternatively the inner core 15, 16 may extend to the edges of the panel so that two separate cavities, one extending over each major face of the inner core, are formed. As discussed above, a preferred material is a thermoset polyurethane elastomer which is formed by injecting a mixture of two components that react in the cavity to form the polyurethane.

After curing, the injection ports and vent holes are filled, e.g. with threaded plugs, and ground flush with the surface of the outer metal plate. It is to be noted that even if a single continuous cavity is present prior to injection, multiple injection ports and vent holes may be provided to ensure complete filling.

If the floor panel is to be provided with recesses, grooves or openings, e.g. for utility conduits and outlets, or other surface features, such as fixing or lifting points, these are preferably formed in or on the outer metal plates prior to injection of the core. Grooves and other indentations can be formed by known techniques such as milling, cutting, bending, rolling and stamping as appropriate to the thickness of the plate and size of feature to be formed. Details can be attached by welding. Tubes to define passageways through the floor panel, e.g. for utility conduits, can be put in place prior to injection of the material to form outer core layer 14. It is also possible to form such features after injection and curing of the outer core layer 14, by coring for example, but in that case measures may need to be taken to ensure that the heat generated by activities such as welding does not deleteriously affect the core 13.

In some circumstances it may be possible to avoid the use of a mould by welding edge plate or perimeter bars to the outer metal plates so that the panel forms its own mould. Depending on the compressibility and resilience of the inner core, it may be necessary to provide restraints to prevent deformation of the outer metal plates due to the internal pressures experienced during injection and curing of layer 14.

It should be noted that after the core has cured, the faceplates and perimeter bars are bound together by the intermediate layer 13 so that in some cases the fixing of the perimeter bars to the face plates need only be sufficient to withstand loads encountered during the injection and curing steps, and not necessarily loads encountered during use of the floor panel 10. To improve sealing of the cavity, gaskets or sealing strips can be provided between the edge plates or perimeter bars and face plates.

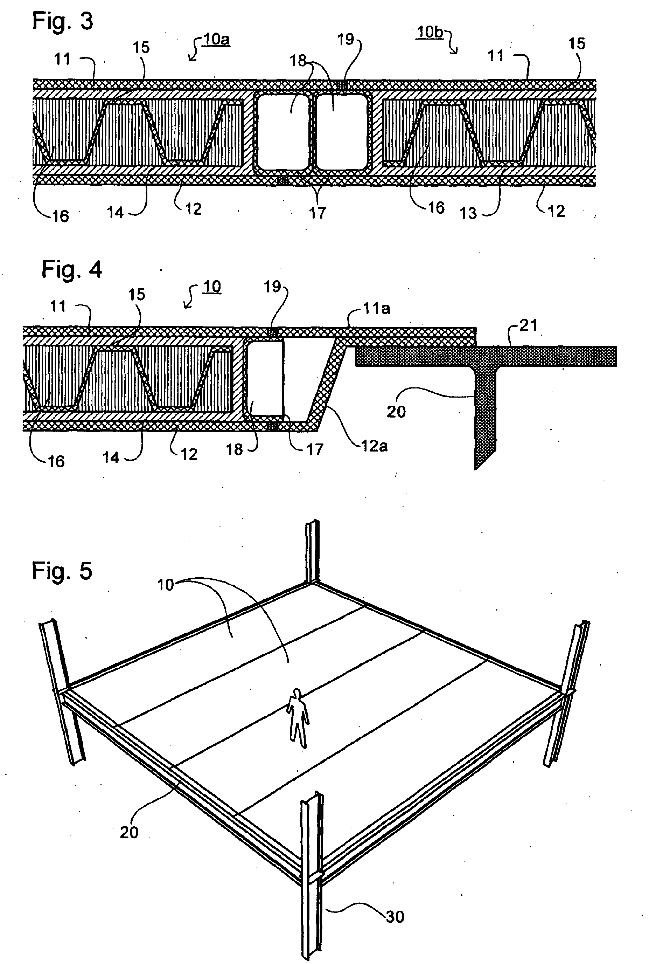

Figure 3 shows an arrangement for connecting structural sandwich floor panels 10a, 10b. In each of the floor panels, the upper and lower metal plates 11, 12 are offset from each other laterally so that on one side the upper plate overhangs the lower plate and on the other side it is set back and the lower plate projects. A hollow tube 17 with flat upper and lower surfaces is provided in the edge between the upper and lower metal plates to seal the floor panel. It is positioned such that it is set back from the edge of whichever of the upper and lower plates projects by a distance slightly less than half its width but the edge of the plate which is set back lies near the midline of the tube 17. When complementary edges of two floor panels are abutted, the respective outer plates meet, with a small separation, against the flat surface of one of the tubes 17, which can then act as backing plates for welds 19 to join the outer plates of one panel to those of the other. Other rolled or extruded structural shapes, including those designed specifically for this type of construction may be used as edge and end members for a plate member. Other methods of connecting panels to ensure shear, moment or shear and moment transfer between panels may be used. Examples include bolts or crimping with different details.

Figure 4 shows an arrangement for connecting a floor panel 10 according to an embodiment of the invention to a beam 20. At the edge of the panel 10 to be connected to the beam 20, the upper plate 11 and lower plate 12 both terminate in the central part of the respective flat faces of edge tube 17 and extension plates 11a, 12a, are welded to the outer plates 11, 12 respectively. As shown, the upper extension plate 11a continues the plane of the upper plate 11 whilst the lower extension plate is shaped with two horizontal portions joined by an angled central portion so that it meets the upper extension plate 11 a to form a double-thickness portion that is attached to the upper flange of beam 20, e.g by welding or bolting. However this arrangement can be inverted, so that the lower extension plate is flat and the upper plate is raised above the upper flange 21 by the panel thickness. Alternatively both extension plates can be shaped to position the upper plate 11 at any desired vertical position relative to the beam 20.

Figure 5 shows four floor panels 10 according to an embodiment forming a floor in a cell of a framework of a building. Columns 30 support horizontal beams 20 between which the floor panels 10 span. Panels of the invention may also be integrated with the columns using collars to provide a flat slab system, i.e. one without supporting beams. Depending on the use of the building, the upper surface of the floor panels may be provided with a suitable surface treatment, floor covering or false floor system. Likewise, the lower surface of the floor panels can be treated or covered or, more commonly, a false ceiling provided to conceal utilities and HVAC ducting.

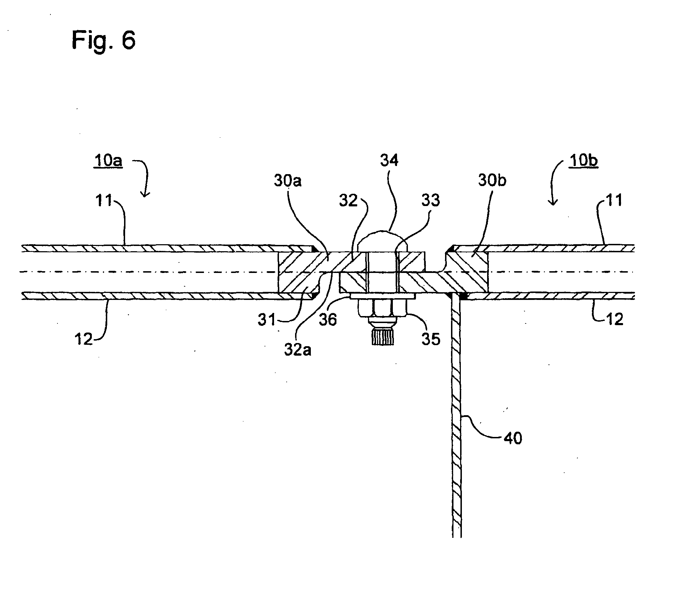

Figure 6 shows in cross-section another arrangement for connecting two floor panels 10a, 10b according to an embodiment of the invention. In the figure, the cores of the panels 10a, 10b have been omitted for clarity.

In this arrangement, the two floor panels 10c, 10b have perimeter bars 30a, 30b in at least one edge which serve both to define the cavity for the core and provide a means for connection to adjacent panels or the building structure. Each perimeter bar 30a, 30b comprises a main part 31 which has a thickness equal to the space between the faceplates 11, 12 of the panels 10a, 10b and a width sufficient to provide a seal and a landing for the faceplates to be welded to it. The main part 31 may be approximately square in cross-section.

Integral with the main part 31 of the perimeter bar 30 is a projecting flange 32 by which the panels are corrected to each other or the structure. In an embodiment, as illustrated, the projecting flange 32 is approximately half the thickness of the main part 31 and parallel to the plane of the panel. To enable an aligned connection between panels, all of the projecting flange 32 lies on one side of a plate bisecting the perimeter bar and parallel to its panel and preferably one face 32a of the projecting flange 32 lies on the bisecting plane. The perimeter bars 30 are installed on the panel so that on one side the projecting flange is above the bisecting plane and on the opposite side the projection flange is below the bisecting plane. Then, panels can be quickly installed by resting the projecting flange 32 of one panel on that of its neighbour. Spacers can be used between the flanges to adjust the height of one panel but this is preferably avoided by making the one face 32a of each projecting flange 32 lie accurately on the bisecting plane. A further alternative is to make perimeter bars of two different but complimentary profiles whereby the plane of connection can be located as desired.

To fix the panels together, the projecting flanges can be connected together by nuts 34 and bolts 35 through holes 33, which may be pre-formed at specific locations or drilled in-situ. Other means of fixing the flanges together - such as rivets, welding or adhesives - may also be used.

As shown in Figure 6, a vertical plate, e.g. the web of a girder, may be welded to the perimeter bar. If necessary, one faceplate can be cut back to accommodate this.

It will be appreciated that the above description is not intended to be limiting and that other modifications and variations fall within the scope of the present invention, which is defined by the appended claims.

## Claims

1. A method of manufacturing a structural sandwich plate member (10), comprising the steps of:
casting a filler material (16) on to a corrugated metal plate (15) leaving areas (15a) of the corrugated metal plate (15) exposed;
providing first and second metal plates (11, 12) in a spaced apart relationship with the corrugated metal plate (15), having the filler material (16) cast thereon, positioned therebetween so as to define a cavity around the corrugated metal plate (15);
filling said cavity with uncured plastics or polymer material (14); and
allowing or causing said plastics or polymer material (14) to cure to bond said outer plates (11, 12) to the exposed areas (15a) of the corrugated metal plate (15) with sufficient strength to transfer shear forces therebetween.

2. A method according to claim 1 wherein the density of the filler material (15b) is less than 50%, preferably less than 25%, more preferably less than 10%, of the density of the outer core layer.

3. A method according to claim 1 or 2 wherein the total area of the exposed parts (15a) of the corrugated plate (15) on each of the major faces of the member is in the range of from 10 to 45%, more preferably in the range of from 20 to 40%, and most preferably in the range of 25 to 35%, of the total area of the face.

4. A method according to any one of the preceding claims wherein the corrugations of the corrugated plate (15) extend substantially parallel to the longest dimension of the member (10).

5. A method according to any one of the preceding claims wherein the bond strength between the outer core layer (14) and the outer metal plates (11, 12) and between the outer core layer (14) and the corrugated metal plate (15) is greater than or equal to 0.5MPa.

## Patentansprüche

1. Verfahren zur Herstellung eines strukturellen Zwischenplattenelements (10), umfassend die Schritte:
das Gießen eines Füllmaterials (16) auf eine gewellte Metallplatte (15), wobei Bereiche (15a) der gewellten Metallplatte (15) freigelegt werden;
das Bereitstellen von ersten und zweiten Metallplatten (11, 12) in einer Abstandsbeziehung mit der gewellten Metallplatte (15), wobei das darauf gegossene Füllmaterial (16) dazwischen positioniert ist, sodass ein Hohlraum um die gewellte Metallplatte (15) definiert ist;
das Füllen des Hohlraums mit ungehärteten Kunststoffen oder Polymermaterial (14); und
das Ermöglichen oder Bewirken des Aushärtens der Kunststoffe oder des Polymermaterials (14), um die äußeren Platten (11, 12) an die freigelegten Bereiche (15a) der gewellten Metallplatte (15) mit ausreichender Festigkeit zu binden, um Querkräfte dazwischen zu übertragen.

2. Verfahren nach Anspruch 1, wobei die Dichte des Füllmaterials (15b) weniger als 50 %, vorzugsweise weniger als 25 %, mehr bevorzugt weniger als 10 % der Dichte der äußeren Kernschicht beträgt.

3. Verfahren nach Anspruch 1 oder 2, wobei der Gesamtbereich der freigelegten Abschnitte (15a) der gewellten Metallplatte (15) auf jeder der Hauptflächen des Elementes im Bereich von 10 bis 45 %, mehr bevorzugt im Bereich von 20 bis 40 % und am meisten bevorzugt im Bereich von 25 bis 35 % des Gesamtbereichs der Fläche liegt.

4. Verfahren nach einem der vorhergehenden Ansprüche, wobei sich die Wellungen der gewellten Metallplatte (15) im Wesentlichen parallel zur längsten Abmessung des Elementes (10) erstrecken.

5. Verfahren nach einem der vorhergehenden Ansprüche, wobei die Haftfestigkeit zwischen der äußeren Kernschicht (14) und den äußeren Metallplatten (11, 12) und zwischen der äußeren Kernschicht (14) und der gewellten Metallplatte (15) größer oder gleich 0,5 MPa beträgt.

## Revendications

1. Procédé permettant de fabriquer un élément structurel de plaques intercalées (10), comprenant les étapes consistant à :
couler un matériau de remplissage (16) sur une plaque de métal ondulée (15) en laissant des zones (15a) de la plaque de métal ondulée (15) exposées ;
fournir des première et seconde plaques de métal (11, 12) dans une relation espacée avec la plaque de métal ondulée (15), sur laquelle est coulé le matériau de remplissage (16), positionnée entre elles de façon à définir une cavité autour de la plaque de métal ondulée (15) ;
remplir ladite cavité avec du plastique ou un matériau polymère (14) non vulcanisé ; et
permettre ou provoquer la vulcanisation du plastique ou du matériau polymère (14) afin de lier lesdites plaques externes (11, 12) aux zones exposées (15a) de la plaque de métal ondulée (15) avec une force suffisante pour transférer les forces de cisaillement entre celles-ci.

2. Procédé selon la revendication 1, dans lequel la densité du matériau de remplissage (15b) est de moins de 50 %, de préférence moins de 25 %, de manière davantage préférée moins de 10 % de la densité de la couche centrale externe.

3. Procédé selon la revendication 1 ou 2, dans lequel l'aire totale des parties exposées (15a) de la plaque de métal ondulée (15) sur chacune des faces majeures de l'élément est dans la plage de 10 à 45 %, de manière davantage préférée de 20 à 40 %, et de manière préférée entre toutes de 25 à 35 % de l'aire totale de la face.

4. Procédé selon l'une quelconque des revendications précédentes dans lequel les ondulations de la plaque ondulée (15) s'étendent sensiblement parallèlement à la dimension la plus longue de l'élément (10) ;

5. Procédé selon l'une quelconque des revendications précédentes dans lequel la force de liaison entre la couche centrale externe (14) et les plaques de métal externes (11, 12) et entre la couche centrale externe (14) et la plaque de métal ondulée (15) est supérieure ou égale à 0,5 MPa.
